# EUROPEAN PATENT SPECIFICATION

(11) **EP 4 094 928 B1**
(45) Date of publication and mention of the grant of the patent: **13.08.2025**
(21) Application number: 21872750.1
(22) Date of filing: 30.08.2021
(51) Int. Cl.: B29C 65/02, B29C 53/04, B29C 53/84, H01M 10/04, H01M 50/105, H01M 50/116, H01M 50/119, H01M 50/124, H01M 50/129, H01M 50/133, H01M 50/141, B29L 31/00, B29K 705/02

(54) **APPARATUS AND METHOD FOR FOLDING A SIDE**
VORRICHTUNG UND VERFAHREN ZUM FALTEN EINER SEITE
DISPOSITIF ET PROCÉDÉ POUR PLIER UN CÔTÉ

(30) Priority: 23.09.2020 KR 20200123360; 04.01.2021 KR 20210000522
(43) Date of publication of application: 30.11.2022
(73) Proprietor: LG Energy Solution, Ltd., Seoul 07335 (KR)
(72) Inventor: KIM, Geun Hee, Daejeon 34122 (KR); OH, Se Young, Daejeon 34122 (KR); HA, Jeong Min, Daejeon 34122 (KR); PARK, Ji Soo, Daejeon 34122 (KR)
(74) Representative: Plasseraud IP
(86) International application number: PCT/KR2021/011608
(87) International publication number: WO 2022/065720

(56) References cited:
- EP-A1- 0 997 955
- EP-A1- 3 035 432
- JP-A- 2001 160 379
- JP-A- 2001 283 799
- JP-A- 2004 014 445
- KR-A- 20190 024 755
- KR-B1- 101 766 966
- KR-B1- 102 104 319

## Description

### TECHNICAL FIELD

The present invention relates to an apparatus and method for folding a side, and more particularly, to an apparatus and method for folding a side, in which the side and a cup part do not adhere to each other when the side of a secondary battery is folded, but the side increases in retention force to be maintained in the folded state while being in contact with the cup part.

### BACKGROUND ART

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified into a pouch type secondary battery and a can type secondary battery according to a material of a case accommodating the electrode assembly. In the pouch type secondary battery, an electrode assembly is accommodated in a pouch made of a flexible polymer material. Also, in the can type secondary battery, an electrode assembly is accommodated in a case made of a metal or plastic material.

A pouch, which is a case of the pouch type secondary battery, is manufactured by forming a cup part by performing press processing on a pouch film having flexibility. In addition, when the cup part is formed, an electrode assembly is accommodated in an accommodation space of the cup part, and then, a side of the cup part is sealed to manufacture a secondary battery.

In the press processing, drawing molding is performed by inserting a pouch film into a molding device such as a press equipment and applying a pressure to the pouch film by using a punch to draw the pouch film. The pouch film is provided as a plurality of layers, and a moisture barrier layer disposed in the pouch film is made of a metal. However, according to the related art, the metal of the moisture barrier layer has a large crystal grain size among aluminum alloys, and the moisture barrier layer has a thin thickness. Therefore, when the side is folded to reduce energy density relative to a volume, the side is not fixed and unfolded again at a predetermined angle. Accordingly, when the tape is separately attached to the side, there is a problem in that the overall thickness of the secondary battery increases due to a thickness of the tape itself. In addition, since an additional process of attaching the tape is required after the process of folding the side, there is a problem in that the number of processes increases, and manufacturing yield of the secondary battery is reduced.

### [Prior Art Documents]

Korea Patent Publication No. 2019-0048863 discloses an upper sealing assembly for sealing a secondary battery.
EP0997955A1 discloses a bending jig with a rotatable block for folding the heat-fused lateral sides of an electrolyte cell.
JP2001160379A discloses an apparatus for folding a sealing edge portion of a battery case involving two plates moving linearly.
Finally, EP3035432A1 discloses a device with a heated roller for bending the outer edges of a battery case, which may be carried out at a heating temperature of 150 °C to 190 °C for a time of 1 to 3 seconds.

### DISCLOSURE OF THE INVENTION

### TECHNICAL PROBLEM

An object of the present invention is to provide an apparatus and method for folding a side, in which the side and a cup part do not adhere to each other when the side of a secondary battery is folded, but the side increases in retention force to be maintained in a folded state while being in contact with the cup part.

The objects of the present invention are not limited to the aforementioned object, but other objects not described herein will be clearly understood by those skilled in the art from descriptions below.

### TECHNICAL SOLUTION

An apparatus for folding a side extending outward from a cup part in a battery case of a pouch-type secondary battery according to the independent claim 1 for solving the above problems includes: a body having a plate shape, adjacent to the side, and disposed to be elongated in a longitudinal direction of the secondary battery, wherein the body includes: a heating part disposed at one side thereof to heat an inner portion disposed at a relatively inner side of the side; and a pressing part disposed at the other side thereof to press an outer portion disposed at a relatively outer side of the side, wherein, when the heating part heats the inner portion, the body rotates to allow the pressing part to press the outer portion.

In addition, the inner portion of the side may not be sealed, and the outer portion of the side may be sealed.

In addition, the side may not adhere to the cup part and be folded at the inner portion.

In addition, the side may be in contact with an outer wall of the cup part and be folded.

In addition, the side may include: a first folding part folded at a position that is relatively closer to an outer end; and a second folding part folded at a position that is relatively closer to the cup part.

In addition, the first folding part may be disposed at the outer portion, and the second folding part may be disposed at the inner portion.

In addition, the side may be folded at an angle of 170° to 180° with respect to the first folding part.

In addition, the side may be folded at an angle of 85° to 95° with respect to the second folding part.

In addition, the side may be folded at an angle of 88° to 92° with respect to the second folding part.

The heating part heats the inner portion at a temperature of 165°C to 220°C.

The heating part heats the inner portion for a time of 1 second to 3 seconds.

In addition, the battery case may be manufactured by molding a pouch film, and the pouch film may include: a sealant layer made of a first polymer and formed at the innermost layer; a surface protection layer made of a second polymer and formed at the outermost layer; and a gas barrier layer made of a metal containing an AA80XX-based aluminum alloy and laminated between the surface protection layer and the sealant layer, wherein the gas barrier layer may have a thickness of 50 µm to 80 µm, and the sealant layer may have a thickness of 60 µm to 100 µm.

In addition, the heating part may include a heating coil, which receives power from the outside to generate heat, therein.

In addition, the heating part may include a tube in which a fluid flows.

A method for folding a side according to the independent claim 4 for solving the above problems includes: allowing a body having a plate shape to be disposed adjacent to side and to be elongated in a longitudinal direction of a secondary battery; allowing a heating part disposed at one side of the body to be in contact with an inner portion disposed at a relatively inner side of the side, thereby heating the inner portion; and allow the body to rotate so that a pressing part disposed at the other side of the body presses an outer portion disposed at a relatively outer side of the side.

In the heating of the inner portion, the heating part heats the inner portion at a temperature of 165°C to 220°C.

In the heating of the inner portion, the heating part heats the inner portion for a time of 1 second to 3 seconds.

An apparatus for folding a side, which folds a side extending outward from a cup part in a battery case of a pouch-type secondary battery, according to the independent claim 14 includes: a first side folding device configured to primarily fold the side; and a second side folding device configured to secondarily fold the side, wherein the first side folding device includes a first body having a circular shape, adjacent to the side, and disposed to be elongated in a longitudinal direction of the secondary battery, wherein the first body heats an inner portion disposed at a relatively inner side of the side and presses the inner portion in a direction in which the inner portion is folded, and the second side folding device includes a second body having a plate shape, adjacent to the side, and disposed to be elongated in the longitudinal direction of the secondary battery, wherein the second body comprises: a heating part disposed at one side thereof to heat the inner portion disposed at the relatively inner side of the side; and a pressing part disposed at the other side to press an outer portion disposed at a relatively outer side of the side, wherein, after the first side folding device heats and presses the inner portion by using the first body, the second body of the second side folding device moves in a direction closer to the cup part so that the heating part heats the inner portion, and the pressing part presses the outer portion. The heating part heats the inner portion at a temperature of 165°C to 220°C for a time of 1 second to 3 seconds.

The cup part includes a first cup part disposed at a lower side, and a second cup part disposed above the first cup part, and the first body of the first side folding device moves upward from a lower side that is a direction from the first cup part to the second cup part to heat and press the inner portion.

After the first side folding device heats and presses the inner portion, when the second body of the second side folding device moves in the direction closer to the cup part, the second body may linearly move in the direction closer to the cup part.

The linear movement of the second body may be linear movement moving along a virtual plane parallel to a plane formed by a bottom portion of the cup part.

A method for folding a side which extends outward from a cup part in a battery case of a pouch-type secondary battery, according to the independent claim 17 includes: a primary side folding process of primarily folding the side by using a first side folding device; and a secondary side folding process of secondarily folding the side by using a second side folding device, wherein the primary side folding process includes a process of heating an inner portion disposed at a relatively inner side of the side and pressing the inner portion in a direction, in which the inner portion is folded, by using a first body of the first side folding device comprising the first body having a circular shape, adjacent to the side, and disposed to be elongated in a longitudinal direction of the secondary battery, and the secondary side folding process performed after the primary side folding process includes a process of heating the inner portion through a heating part disposed at one side thereof and pressing an outer portion disposed at a relatively outer side of the side through a pressing part disposed at the other side thereof while moving a second body of the second side folding device, which includes the second body having a plate shape, adjacent to the side, and disposed to be elongated in the longitudinal direction of the secondary battery, in a direction closer to the cup part. The heating part heats the inner portion at a temperature of 165°C to 220°C for a time of 1 second to 3 seconds.

The cup part includes a first cup part disposed at a lower side, and a second cup part disposed above the first cup part, and in the primary side folding process, the first body of the first side folding device moves upward from a lower side that is a direction from the first cup part to the second cup part to heat and press the inner portion.

In the secondary side folding process, when the second body of the second side folding device moves in the direction closer to the cup part, the second body may linearly move in the direction closer to the cup part.

The linear movement of the second body may be linear movement moving along a virtual plane parallel to a plane formed by a bottom portion of the cup part.

Other particularities of the embodiments are included in the detailed description and drawings.

### ADVANTAGEOUS EFFECTS

According to the embodiments of the present invention, there are at least the following effects.

The heating part of the apparatus for folding the side may heat the inner portion of the side to soften the first polymer of the sealant layer, and then, the pressing part of the apparatus for folding the side may press the outer portion of the side to allow the side to be in completely contact with the outer wall of the cup part and prevent the side from being unfolded again without attaching a separate tape.

The effects of the prevent invention are not limited by the aforementioned description, and thus, more varied effects are involved in this specification. f

### BRIEF DESCRIPTION OF THE DRAWINGS

FIG. 1 is an assembled view of a secondary battery 1 according to an embodiment of the present invention;
FIG. 2 is a cross-sectional view of a pouch film 135 according to an embodiment of the present invention;
FIG. 3 is a schematic view illustrating a state in which a side 134 of a battery case 13 is sealed according to an embodiment of the present invention.
FIG. 4 is a schematic side view illustrating a state in which a side 334 is folded according to the related art.
FIG. 5 is a schematic top view illustrating a state in which the side 334 is folded according to the related art.
FIG. 6 is a schematic side view illustrating a state in which a heating part 211 of an apparatus 2 for folding a side 134 heats an inner portion 1242 of the side 134 according to an embodiment of the present invention.
FIG. 7 is a schematic side view illustrating a state in which a pressing part 212 of the apparatus 2 for folding the side 134 presses an outer portion 1341 of the side 134 according to an embodiment of the present invention.
FIG. 8 is a schematic side view illustrating a state in which the side 134 is folded according to an embodiment of the present invention.
FIG. 9 is a schematic side view illustrating a state in which a first body of a first side folding device heats and presses an inner portion of a side according to another embodiment of the present invention.
FIG. 10 is a schematic side view illustrating a state in which a second body of a second side folding device linearly moves in a direction closer to a cup part according to another embodiment of the present invention.
FIG. 11 is a schematic side view illustrating a state in which a heating part of the second side folding device heats the inner portion of the side, and a pressing part presses an outer portion of the side according to another embodiment of the present invention.

### MODE FOR CARRYING OUT THE INVENTION

Advantages and features of the present invention, and implementation methods thereof will be clarified through following embodiments described with reference to the accompanying drawings. The present invention may, however be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless terms used in the present invention are defined differently, all terms (including technical and scientific terms) used herein have the same meaning as generally understood by those skilled in the art. Also, unless defined clearly and apparently in the description, the terms as defined in a commonly used dictionary are not ideally or excessively construed as having formal meaning.

In the following description, the technical terms are used only for explaining a specific exemplary embodiment while not limiting the present invention. In this specification, the terms of a singular form may include plural forms unless specifically mentioned. The meaning of "includes (comprises)" and/or "including (comprising)" does not exclude other components besides a mentioned component.

### One embodiment

Hereinafter, preferred embodiments will be described in detail with reference to the accompanying drawings.

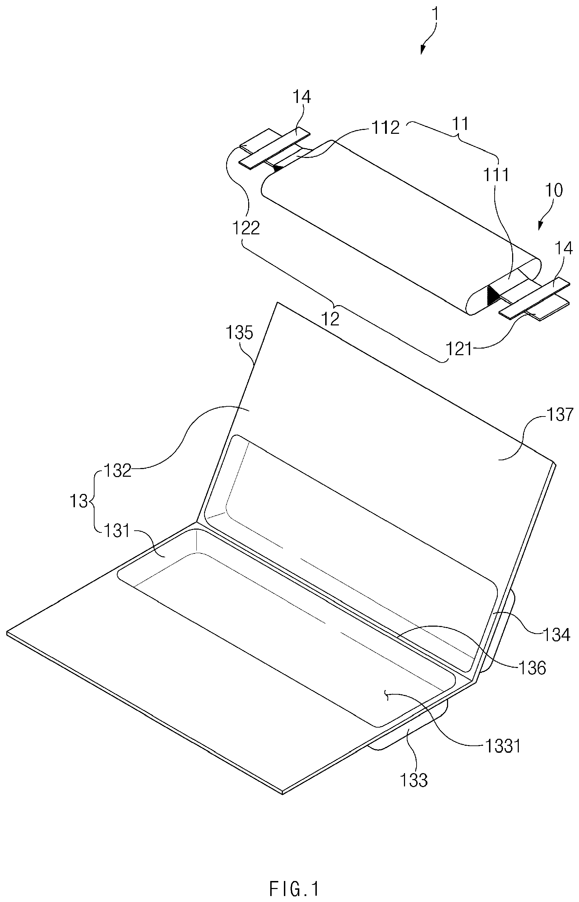

FIG. 1 is an assembled view of a secondary battery 1 according to an embodiment of the present invention;
An electrode assembly 10 is formed by alternately stacking electrodes and separators. First, slurry in which an electrode active material, a binder, and a plasticizer are mixed with each other is applied to a positive electrode collector and a negative electrode collector to manufacture the electrodes such as a positive electrode and a negative electrode. Then, respective separators are stacked between the electrodes to form the electrode assembly 10, the electrode assembly 10 is inserted into the battery case 13, and an electrolyte is injected to seal the battery case 13.

Specifically, the electrode assembly 10 includes two types of electrodes, such as the positive electrode and the negative electrode, and the separator interposed between the electrodes to insulate the electrodes from each other. The electrode assembly 10 may be a stack type, a jelly roll type, a stacked and folding type, or the like. Each of the two types of electrodes, i.e., the positive electrode and the negative electrode has a structure in which active material slurry is applied to the electrode collector having a metal foil or metal mesh shape. The slurry may be usually formed by agitating a granular active material, an auxiliary conductor, a binder, and a plasticizer with a solvent added. The solvent may be removed in the subsequent process.

As illustrated in FIG. 1, the electrode assembly 10 includes electrode tabs 11. The electrode tabs 11 are respectively connected to a positive electrode and a negative electrode of the electrode assembly 10 to protrude outward from the electrode assembly 10, thereby providing a path, through which electrons are moved, between the inside and outside of the electrode assembly 10. An electrode collector of the electrode assembly 10 is constituted by a portion coated with an electrode active material and a distal end, on which the electrode active material is not applied, i.e., a non-coating part. Also, each of an electrode tabs 11 may be formed by cutting the non-coating part or by connecting a separate conductive member to the non-coating part through ultrasonic welding. As illustrated in FIG. 1, the electrode tabs 11 may protrude in each of different directions of the electrode assembly 10, but is not limited thereto. For example, the electrode tabs may protrude in various directions, for example, protrude in parallel to each other from one side in the same direction.

In the electrode assembly 10, an electrode lead 12 that supplies electricity to the outside of the secondary battery 1 is connected to the electrode tab 11 through spot welding. Also, a portion of the electrode lead 12 is surrounded by an insulating part 14. The insulating part 14 may be disposed to be limited to a side 134, at which a first case 131 and a second case 132 of the battery case 13 are thermally fused, so that the electrode lead 12 is bonded to the battery case 13. Also, electricity generated from the electrode assembly 10 may be prevented from flowing to the battery case 13 through the electrode lead 12, and the sealing of the battery case 13 may be maintained. Thus, the insulating part 14 may be made of a nonconductor having non-conductivity, which is not electrically conductive. In general, although an insulation tape which is easily attached to the electrode lead 12 and has a relatively thin thickness is mainly used as the insulating part 14, the present invention is not limited thereto. For example, various members may be used as the insulating part 14 as long as the members are capable of insulating the electrode lead 12.

One end of the electrode lead 12 is connected to the electrode tab 11, and the other end of the electrode lead 12 protrudes to the outside of the battery case 13. That is, the electrode lead 12 includes a cathode lead 121 having one end connected to a cathode tab 111 to extend in a direction in which the cathode tab 111 protrudes and an anode lead 122 having one end connected to an anode tab 112 to extend in a direction in which the anode tab 112 protrudes. On the other hand, as illustrated in FIG 1, all of the other ends of the positive electrode lead 121 and the negative electrode lead 122 protrude to the outside of the battery case 13. As a result, electricity generated in the electrode assembly 10 may be supplied to the outside. Also, since each of the positive electrode tab 111 and the negative electrode tab 112 is formed to protrude in various directions, each of the positive electrode lead 121 and the negative electrode lead 122 may extend in various directions.

The positive electrode lead 121 and the negative electrode lead 122 may be made of materials different from each other. That is, the cathode lead 121 may be made of the same material as the cathode collector, i.e., an aluminum (Al) material, and the anode lead 122 may be made of the same material as the anode collector, i.e., a copper (Cu) material or a copper material coated with nickel (Ni). Also, a portion of the electrode lead 12, which protrudes to the outside of the battery case 13, may be provided as a terminal part and electrically connected to an external terminal.

The battery case 13 is a pouch made of a flexible material, which accommodates the electrode assembly 10 therein. Hereinafter, the case in which the battery case 13 is the pouch will be described. When a pouch film 135 having flexibility is drawing-molded by using a punch 22 or the like, a portion of the pouch film 135 is stretched to form a cup part 133 including a pocket-shaped accommodation space 1331, thereby manufacturing the battery case 13.

The battery case 13 accommodates the electrode assembly 10 so that a portion of the electrode lead 12 is exposed and then is sealed. As illustrated in FIG. 1, the battery case 13 includes the first case 131 and the second case 132. The accommodation space 1331 in which the cup part 133 is formed to accommodate the electrode assembly 10 may be provided in the second case 131, and the second case 132 may cover an upper side of the accommodation space 1331 so that the electrode assembly 10 is not separated to the outside of the battery case 13. As illustrated in FIG. 1, one side of the first case 131 and one side of the second case 132 may be connected to each other. However, the present invention is not limited thereto. For example, the first case 131 and the second case 132 may be separately manufactured to be separated from each other.

When the cup part 133 is molded in the pouch film 135, only one cup part 133 may be formed in one pouch film 135, but the present invention is not limited thereto. For example, two cup parts may be drawing-molded to be adjacent to each other in one pouch film 135. Then, as illustrated in FIG. 1, the cup parts 133 are formed in the first case 131 and the second case 132, respectively. Here, each of the cup parts 133, which are respectively formed in the first case 131 and the second case 132, may have the same depth D, but is not limited thereto, and may have different depths D. After accommodating the electrode assembly 10 in the accommodation space 1331 provided in the cup part 133 of the first case 131, the battery case 13 may be folded with respect to a bridge 136 formed between the two cup parts 133 in the battery case 13 so that the two cup parts 133 face each other. Then, the cup part 133 of the second case 132 also accommodates the electrode assembly 10 from the upper side thereof. Accordingly, since the two cup parts 133 accommodate one electrode assembly 10, the electrode assembly 10 having a thicker thickness may be accommodated when compared to a case in which one cup part 133 is provided. In addition, since the first case 131 and the second case 132 are integrally connected to each other by folding the battery case 13, the number of sides 134 to be sealed when a sealing process is performed later may be reduced. Thus, a process rate may be improved, and the number of sealing processes may be reduced.

The battery case 13 may include the cup part 133, in which the accommodation space 1331 accommodating the electrode assembly 10 is provided, and a degassing part 137 formed at a side portion of the cup part 133 to discharge a gas generated in the cup part 133 through a degassing hole H. When the electrode assembly 10 is accommodated in the cup part 133 of the battery case 13, and the electrolyte is injected, and then an activation process is performed, a gas is generated inside the battery case 13, and thus, a degassing process for discharging the gas to the outside is performed.

When the electrode lead 12 is connected to the electrode tab 11 of the electrode assembly 10, and the insulating part 14 is formed on a portion of the electrode lead 12, the electrode assembly 10 is accommodated in the accommodation space 1331 provided in the cup part 133 of the first case 131, and the second case 132 covers the accommodation space from the upper side. Also, the electrolyte is injected into the accommodation space, and the side 134 extending to the outside of the cup part 133 of each of the first case 131 and the second case 132 is sealed. The electrolyte may move lithium ions generated by electrochemical reaction of the electrode during charging and discharging of the secondary battery 1. The electrolyte may include a non-aqueous organic electrolyte that is a mixture of a lithium salt and a high-purity organic solvent or a polymer using a polymer electrolyte. Furthermore, the electrolyte may include a sulfide-based, oxide-based, or polymer-based solid electrolyte, and the solid electrolyte may have flexibility that is easily deformed by external force. The pouch type secondary battery 1 may be manufactured through the above-described method.

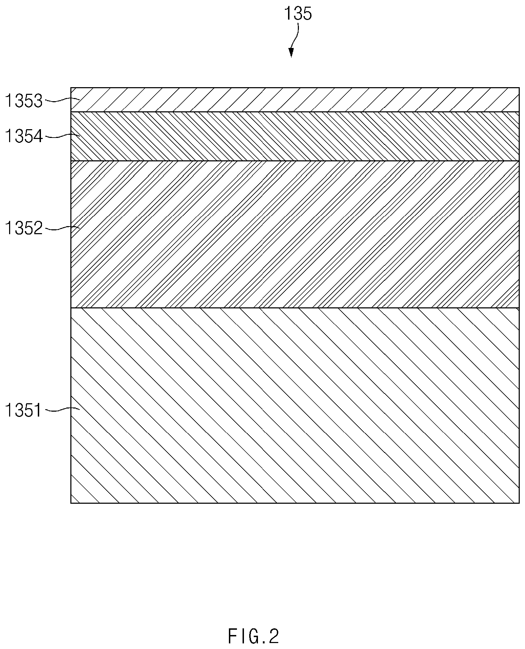

FIG. 2 is a cross-sectional view of a pouch film 135 according to an embodiment of the present invention;
The pouch that is the battery case 13 of the pouch type secondary battery 1 according to an embodiment of the present invention may be manufactured by drawing the pouch film 135. That is, the pouch film 135 is drawn by using the punch 22 or the like to form the cup part 133, thereby manufacturing the battery case 13. According to an embodiment of the present invention, as illustrated in FIG. 2, the pouch film 135 includes a sealant layer 1351, a moisture barrier layer 1352, a surface protection layer 1353, and a drawing assistance layer 1354.

The sealant layer 1351 may be made of the first polymer and be formed at the innermost layer to be in direct contact with the electrode assembly 10. Here, the innermost layer represents a layer disposed at the last when oriented in a direction opposite to the direction in which the electrode assembly 10 is disposed with respect to the moisture barrier layer 1352. The battery case 13 may be manufactured while a portion of the pouch film 135 is drawn to form the cup part 133 including the accommodation space 1331 having the pocket shape when the pouch film 135 having the stacked structure as described above is drawing-molded by using the punch 22 or the like. Also, when the electrode assembly 10 is accommodated in the accommodation space 1331, the electrolyte is injected. Thereafter, when the first case 131 and the second case 132 are in contact with each other so as to face each other, and thermal compression is applied to the side 134, the sealant layers 1351 are bonded to each other to seal the pouch. Here, since the sealant layer 1351 is in direct contact with the electrode assembly 10, the sealant layer 23 has to have insulating properties. Also, since the sealant layer 23 is in contact with the electrolyte, the sealant layer 23 has to have corrosion resistance. Also, since the inside of the battery case 13 is completely sealed to prevent materials from moving between the inside and outside of the battery case 13, high sealability has to be realized. That is, the side 134 in which the sealant layers 1351 are bonded to each other should have superior thermal bonding strength. In general, the first polymer forming the sealant layer 1351 may include one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Particularly, a polyolefin-based resin such as polypropylene (PP) or polyethylene (PE) is used for the sealant layer 23. Polypropylene (PP) is excellent in mechanical properties such as tensile strength, rigidity, surface hardness, abrasion resistance, and heat resistance and chemical properties such as corrosion resistance and thus is mainly used for manufacturing the sealant layer 1351. Furthermore, the sealant layer 23 may be made of a casted polypropylene, an acid modified polypropylene, or a polypropylene-butylene-ethylene terpolymer. Here, the acid-treated polypropylene may be maleic anhydride polypropylene (MAH PP). Also, the sealant layer 1351 may have a single layer structure made of one material or a composite layer structure in which two or more materials are respectively formed as layers.

According to an embodiment of the present invention, the sealant layer 1351 may have a thickness of 60 µm to 100 µm, and in particular, a thickness of 75 µm to 85 µm. If the sealant layer 1351 has a thickness less than 60 µm, there is a problem that the sealant layer 1351 is deteriorated in durability such as a case in which the inside is broken during the sealing. On the other hand, if the thickness of the sealant layer 1351 is thicker than 100 µm, since the entire pouch is excessively thick, the energy density to the volume of the secondary battery 1 may be reduced.

The moisture barrier layer 1352 is stacked between the surface protection layer 1353 and the sealant layer 1351 to secure mechanical strength of the pouch, block introduction and discharge of a gas or moisture outside the secondary battery 1, and prevent the electrolyte from leaking. The moisture barrier layer 1352 is made of a metal, and in particular, the moisture barrier layer 1352 according to an embodiment of the present invention may be made of a metal including an AA88XX-based aluminum alloy. Aluminum may secure the mechanical strength having a predetermined level or more, but be light in weight. Thus, aluminum may secure complement and heat dissipation for electrochemical properties due to the electrode assembly 10 and the electrolyte.

In the related art, although the AA30XX-based aluminum alloys are frequently used, there is a problem that mechanical strength is low because an iron content is 0.7 wt% or less. Thus, the aluminum alloy according to an embodiment of the present invention may be an AA80XX-based aluminum alloy. A variety of materials may be included in the aluminum alloy. For example, one or more kinds of materials selected from the group consisting of iron (Fe), copper (Cu), chromium (Cr), manganese (Mn), nickel (Ni), magnesium (Mg), and zinc (Zn).

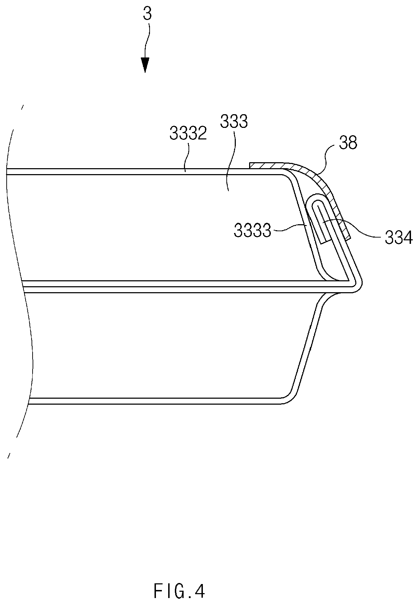

In addition, according to an embodiment of the present invention, the moisture barrier layer 1352 may have a thickness of 50 µm to 80 µm, in particular, 55 µm to 65 µm. According to the related art, the moisture barrier layer has a thickness less than 50 µm to deteriorate the moldability. Accordingly, when the pouch film 135 is drawing-molded, there is a limit to form an outer wall 3333 (see FIG. 4) of the cup part 333 so as to be similar to a vertical state when the cup part 333 (see FIG. 4) is formed to have a deep depth D.

Conversely, if the moisture barrier layer has a thickness greater than about 80 µm, not only the manufacturing cost increases, but also the total thickness of the secondary battery is excessively thick to deteriorate the energy density relative to the volume of the secondary battery. If the thickness of the sealant layer is reduced to be thinner than 60 µm in order to reduce the total thickness of the secondary battery, sealing durability may be deteriorated.

Therefore, according to an embodiment of the present invention, since moldability of the moisture barrier layer 1352 is improved, when the pouch film 135 is drawing-molded, the outer wall 1333 of the cup part 133 may be formed to be similar to the vertical state while the depth D of the cup part 133 is formed deeply. Thus, since the accommodation space 1331 increases in volume, the electrode assembly 10 accommodated in the accommodation space 1331 may also increase in volume, and energy efficiency compared to the volume of the secondary battery 1 may also increase. In addition, the manufacturing costs may not increase significantly, the total thickness of the pouch may not increase significantly without reducing the thickness of the sealant layer 1351, and the sealing durability may not be deteriorated.

The surface protection layer 1353 is made of the second polymer and formed at the outermost layer to protect the secondary battery 1 against external friction and collision and also electrically insulates the electrode assembly 10 from the outside. Here, the outermost layer represents a layer disposed at the last when oriented in a direction opposite to the direction in which the electrode assembly 10 is disposed with respect to the moisture barrier layer 1352. The second polymer forming the surface protection layer 1353 may include one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Particularly, a polymer such as polyethylene terephthalate (PET) having abrasion resistance and heat resistance may be used mainly. Also, the surface protection layer 1353 may have a single layer structure made of one material or a composite layer structure in which two or more materials are respectively formed as layers.

According to an embodiment of the present invention, the surface protection layer 1353 may have a thickness of 5 µm to 25 µm, in particular, 7 µm to 12 µm. If the thickness of the surface protection layer 1352 is less than 5 µm, there may be a problem that external insulation is deteriorated. On the other hand, if the thickness of the surface protection layer 1352 is thicker than 25 µm, the entire pouch is thicker, and thus, the energy density to the volume of the secondary battery 1 may be reduced.

Although PET is inexpensive, has excellent durability, and has excellent electrical insulation, the PET has poor bonding force with respect to aluminum, which is frequently used for the moisture barrier layer 1352, and also, a behavior when the PET is drawn by applying stress may be different. Thus, when the surface protection layer 1353 and the moisture barrier layer 1352 are directly bonded to each other, the protection layer 1353 and the moisture barrier layer 1352 may be delaminated during the drawing molding. As a result, the moisture barrier layer 1352 is not uniformly drawn to cause the deterioration in moldability.

According to an embodiment of the present invention, the battery case 13 may be made of a third polymer and further include the drawing assistance layer 1354 that is stacked between the surface protection layer 1353 and the moisture barrier layer 1352. The drawing assistance layer 1354 may be stacked between the surface protection layer 1352 and the moisture barrier layer 1352 to prevent the surface protection layer 1353 and the moisture barrier layer 1352 from being delaminated when the surface protection layer 1352 and the moisture barrier layer 1352 are drawn. The third polymer forming the drawing assistance layer 1354 may include one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Particularly, since a nylon resin easily adheres to polyethylene terephthalate (PET) of the surface protection layer 1352, and a behavior when being drawn is similar to that of an aluminum alloy of the moisture barrier layer 1352, the nylon resin may be mainly used. Also, the drawing assistance layer 1354 may have a single layer structure made of one material or a composite layer structure in which two or more materials are respectively formed as layers.

According to the related art, the moisture barrier layer had a thickness of about 30 µm to about 50 µm, particularly 40 µm, and thus, the drawing assistance layer had a fairly thin thickness of about 15 µm. That is, a thickness ratio of the drawing assistance layer and the moisture barrier layer is 1:2.67, and a thickness rate of the moisture barrier layer was considerably high. However, as described above, according to an embodiment of the present invention, since the moisture barrier layer 1352 has a thickness of approximately 50 µm to approximately 80 µm, and in particular, a thickness of 55 µm to 65 µm, the moldability of the moisture barrier layer 1352 is improved. Here, in order to also improve the moldability of the drawing assistance layer 1354, the drawing assistance layer 1354 may have a thickness of 20 µm to 50 µm, and in particular, a thickness of 25 µm to 38 µm. If the drawing assistance layer 1354 has a thickness less than 20 µm, the drawing assistance layer 1354 may not conform to the improved moldability of the moisture barrier layer 1352 and may be damaged during the drawing. Conversely, if the sealant layer 1343 has a thickness greater than 50 µm, the total thickness of the pouch is thick to increase in volume of the secondary battery and deteriorate in energy density. Particularly, according to an embodiment of the present invention, a thickness ratio of the drawing assistance layer 1354 and the moisture barrier layer 1352 may be less than 1:2.5. That is, the thickness ratio of the drawing assistance layer 1354 may more increase when compared to the thickness ratio of the drawing assistance layer 1354 according to the related art. However, when the thickness of the drawing assistance layer 1354 is excessively thick, the total thickness of the pouch is thicker, and thus, the thickness ratio may be greater than 1:1.5 in order to prevent the total thickness of the pouch from be excessively thicker. That is, the thickness ratio may be 1:1.5 to 1:2.5.

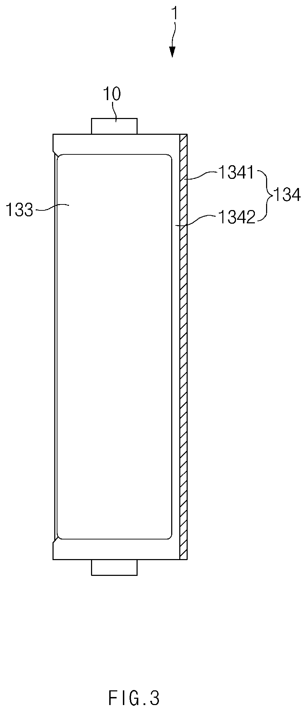

FIG. 3 is a schematic view illustrating a state in which the side 134 of the battery case 13 is sealed according to an embodiment of the present invention.

The electrode assembly 10 is accommodated in the cup part 133 formed by drawing-molding the pouch film 135, and the battery case 13 is folded with respect to a bridge 136 so that the two cup parts 133 of the first case 131 and the second case 132 face each other. In addition, after sealing the side 134 and performing a degassing process through the degassing part 137, the degassing part 137 is cut. As a result, as illustrated in FIG. 3, a length of the degassing part 137 may be shortened, and a volume of the secondary battery 1 may be reduced.

In the side 134 remaining after cutting the degassing part 137 among the plurality of sides 134, the electrode lead 12 is not formed to protrude. However, if the side 134 is left as it is after sealing, the overall volume of the secondary battery 1 increases. Accordingly, to reduce energy density relative to the volume, it is desirable to fold the side 134.

The side 134 may include an outer portion 1341 and an inner portion 1342 as illustrated in FIG. 3. The outer portion 1341 is a portion that is disposed relatively outward from the side 134 and is sealed, and the inner portion 1342 is an area that is disposed relatively inward from the side 134 and is not sealed.

Particularly, when the side 134 of the battery case 13 is sealed to form the outer portion 1341, the outer portion 1341 may not be directly connected to the cup part 133, but be spaced a predetermined distance from the cup part 133. When sealing the side 134, heat and pressure are applied to the side 134 using a separate sealing tool (not shown). However, if the side 134 is sealed while the sealing tool is in close contact with the cup part 133, a sealant layer 1351 disposed inside the side 134 is partially melted to leak toward the electrode assembly 10, thereby contaminating the electrode assembly 10. In addition, the heat of the sealing tool may be transferred to the electrode assembly 10 to damage the electrode assembly 10. Therefore, it is preferable to seal the side 134 in a state in which the sealing tool is spaced apart from the cup part 133 to some extent. Then, a portion sealed by the sealing tool becomes the outer portion 1341, and a portion that is not sealed because the sealing tool is spaced apart from the cup part 133 becomes the inner portion 1342.

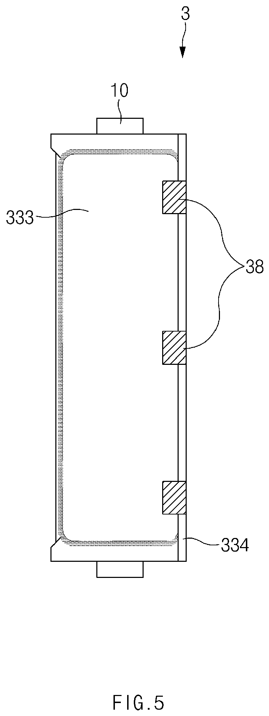

FIG. 4 is a schematic side view illustrating a state in which the side 334 is folded according to the related art, and FIG. 5 is a schematic top view illustrating a state in which the side 334 is folded according to the related art.

In the related art, when the side 334 is folded, there is a problem in that the side 334 is not fixed and is unfolded again at a predetermined angle. Specifically, as described above, the pouch film 135 is formed by stacking the sealant layer 1351, the moisture barrier layer 1352, the drawing assistance layer 1354, and the surface protection layer 1353. Among them, since the sealant layer 1351 includes a first polymer, particularly polypropylene (PP), flexibility and elasticity are good. Therefore, when the side 134 is folded, restoring force to return to the original state is large. On the other hand, since the moisture barrier layer 1352 is made of a metal, in particular, an aluminum alloy, after the side 334 is folded, a limit of elastic deformation is exceeded, and thus the retention force to maintain the folded state is large.

However, in the pouch film 135 according to the related art, the moisture barrier layer 1352 has a thickness of about 30 µm to 50 µm, and the sealant layer 1351 has a thickness of about 60 µm to 100 µm. That is, the thickness of the moisture barrier layer 1352 is significantly thinner than the thickness of the sealant layer 1351. Therefore, the restoring force is greater than the retention force, and thus, the side 334 is not fixed and unfolded again at a predetermined angle. Then, there is a problem in that an unnecessary volume of the secondary battery 3 increases due to the side 334.

To solve this problem, according to the related art, as illustrated in FIGS. 4 and 5, a tape 38 is separately attached to the side 334. In particular, the tape 38 is attached together to the side 334 and the outer surface of the bottom 3332 of the cup part 333 to fixing the side 334 to the cup part 333, thereby preventing the side from being unfolded again. However, in this case, as illustrated in FIG. 4, there is a problem in that the overall thickness of the secondary battery 3 increases due to the thickness of the tape 38 itself. In addition, as illustrated in FIG. 5, there is a problem in that an outer appearance of the secondary battery 3 is not elegant, and also, merchantability is deteriorated.

According to an embodiment of the present invention, the thickness of the moisture barrier layer 1352 may be about 50 µm to about 80 µm, particularly about 55 µm to about 65 µm, and the thickness of the sealant layer 1351 may be about 60 µm to about 100 µm, particularly about 75 µm to 65 µm to about 85 µm. Therefore, since the thickness of the moisture barrier layer 1352 increases when compared to the related art, the moldability of the moisture barrier layer 1352 is improved, and the retention force of the side 134 increases, and thus, a phenomenon in which the side 134 is unfolded again after being folded may be reduced to some extent. However, since the thickness of the sealant layer 1351 is not reduced, restoring force of the side 134 to return to its original state is also large to some extent. Therefore, even after the side 134 is folded, the side 134 may not be still in completely contact with the outer wall 1333 of the cup part 133, but may be unfolded again to some extent.

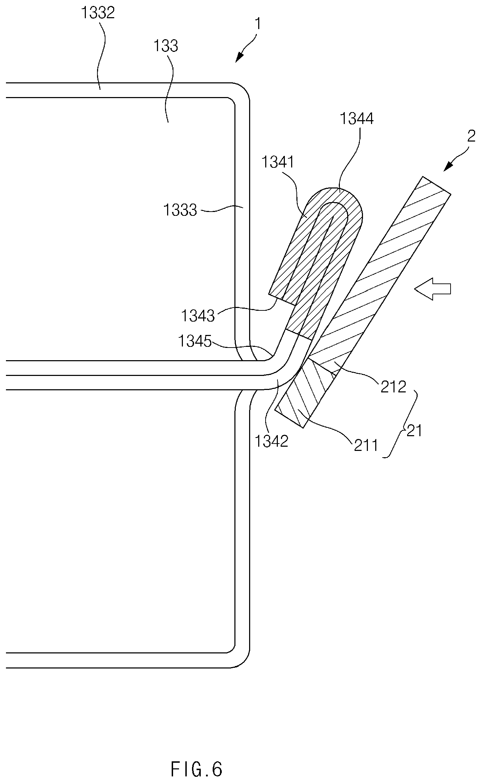

FIG. 6 is a schematic side view illustrating a state in which a heating part 211 of the apparatus 2 for folding the side 134 heats the inner portion 1242 of the side 134 according to an embodiment of the present invention.

When only one cup part 133 is formed on the pouch film 135, the depth D of the cup part 133 may be sufficiently deep, and thus, the side 134 may be folded only once. On the other hand, when the two cup parts 133 are formed on the pouch film 135, the depth D of the cup part 133 may be shallower than when one cup part 133 is formed. This is because, when the pouch film 135 is molded, not only the cup part 133 is intensively drawn, but also the peripheral sides 134 of the cup part 133 are finely drawn as a whole. However, if the width of the side 134 is longer than the depth D of the cup part 133, when the side 134 is folded only once, the outer end 1343 of the side 134 may further protrude outward than the bottom part 1332 of the cup part 133.

Accordingly, if the two cup parts 133 are formed on the pouch film 135, double side folding (DSF) method of folding the side 134 twice as illustrated in FIG. 6 may be used. Specifically, the side 134 may include a first folding part 1344 and a second folding part 1345. The first folding part 1344 is a portion folded at a position relatively closer to the outer end 1343, and the second folding part 1345 is a portion folded at a position relatively closer to the cup part 133. Accordingly, after the side 134 is first folded based on the first folding part 1344, the side 134 may be secondarily folded based on the second folding part 1345. In this case, the first folding part 1344 may be disposed on the outer portion 1341 at the side 134, and the second folding part 1345 may be disposed on the inner potion 1342 at the side 134. Thus, it is possible to prevent the outer end 1343 of the side 134 from protruding further outward than the bottom part 1332 of the cup part 133.

The side 134 may be folded at an angle of 170° to 180°, in particular, an angle of 180° with respect to the first folding part 1344. In addition, the side 134 is preferably folded in the second folding part 1345 so that the side 134 is in completely contact with the outer wall 1333 of the cup part 133. However, as described above, since the restoring force of the sealant layer 1351 is also large to some extent, even after the side 134 is folded, the side may not be still in completely contact with the outer wall 1333 of the cup part 133 and then may be unfolded again to some extent.

According to an embodiment of the present invention, after the heating part 211 of the apparatus 2 for folding the side heats the inner portion 1342 of the side 134 to soften a first polymer of the sealant layer 1351, the pressing part 212 of the apparatus 2 for folding the side may press the outer portion 1341 of the side 134. As a result, the side 134 may be in completely contact with the outer wall 1333 of the cup part 133 to prevent the side from being unfolded again without attaching a separate tape.

For this, an apparatus 2 for folding a side, which folds a side 134 extending outward from a cup part 133 in a battery case 13 of a pouch-type secondary battery 1, according to an embodiment of the present invention includes a body 21 having a plate shape, adjacent to the side 134, and disposed to be elongated in a longitudinal direction of the secondary battery 1, wherein the body 21 includes: a heating part 211 disposed at one side thereof to heat an inner portion 1342 disposed at a relatively inner side of the side 134; and a pressing part 212 disposed at the other side thereof to press an outer portion 1341 disposed at a relatively outer side of the side 134, and when the heating part 211 heats the inner portion 1342, the body 21 rotates to allow the pressing part 212 to press the outer portion 1341.

The apparatus 2 for folding the side may include the body 21 having a very thin plate shape. The body 21 may have a relatively narrow width and a relatively long length. And, as illustrated in FIG. 6, the body 21 may be disposed adjacent to the side 134 of the secondary battery 1, and in this case, the body 21 may be disposed to be elongated in the longitudinal direction of the secondary battery 1.

The body 21 includes the heating part 211 disposed at one side thereof to heat the inner portion 1342 and the pressing part 212 disposed at the other side thereof to press the outer portion 1341. When the body 21 is disposed adjacent to the side 134, the heating part 211 of the body 21 may be disposed to be adjacent to the inner portion 1342 of the side 134. In addition, when the heating part 211 may be in contact with the inner portion 1342 of the side 134 to apply heat, thereby softening a first polymer of a sealant layer 1351 included in the side 134. The heating part 211 may heat the inner portion 1342 at a temperature of 165°C to 220°C for a time of 1 second to 3 seconds, preferably 1.5 seconds to 2 seconds. If the heating part 211 heats at a temperature lower than 165°C or for a time shorter than 1 second, the first polymer of the sealant layer 1351 may not be sufficiently softened. Also, if the heating part 211 is heated at a temperature higher than 220°C or for a time longer than 3 seconds, the sealant layer 1351 disposed inside the side 134 may be partially melted to leak toward the electrode assembly 10. As a result, an electrode assembly 10 may be contaminated, and the heat of the heating part 211 may be transferred to the electrode assembly 10 to damage the electrode assembly 10.

As described above, since a second folding part 1345 is disposed on the inner portion 1342, and the side 134 is secondarily folded based on the second folding part 1345, the inner portion 1342 may include a curved surface. On the other hand, as described above, since the body 21 has the plate shape, the heating part 211 may be formed to be flat to some extent. Accordingly, in order to allow the heating part 211 to be in easily contact the inner portion 1342, as illustrated in FIG. 6, the body 21 may have an inclination about an axis in the longitudinal direction and be disposed to be adjacent to the side 134. In addition, even if the heating part 211 is in contact with the inner portion 1342 to heat the inner portion 1342 of the side 134, since a contact area is not large, the heating part 211 in the body 21 may be formed to be relatively narrowed compared to the pressing part 212.

According to an embodiment of the present invention, the heating part 211 of the body 21 may include a heating coil (not shown) that receives power from the outside to generate heat. For this, a power supply part such as a battery and an external power source may be connected to the body 21. In addition, according to another embodiment of the present invention, the heating part 211 of the body 21 may include a thin tube in which a high-temperature fluid flows. For this, an inlet/outlet tube (not shown) through which the fluid is introduced and discharged may be connected to the body 21, and a separate pump (not shown) may be connected to the inlet/outlet tube. That is, if the heating part 211 generates heat, various methods may be used without being limited.

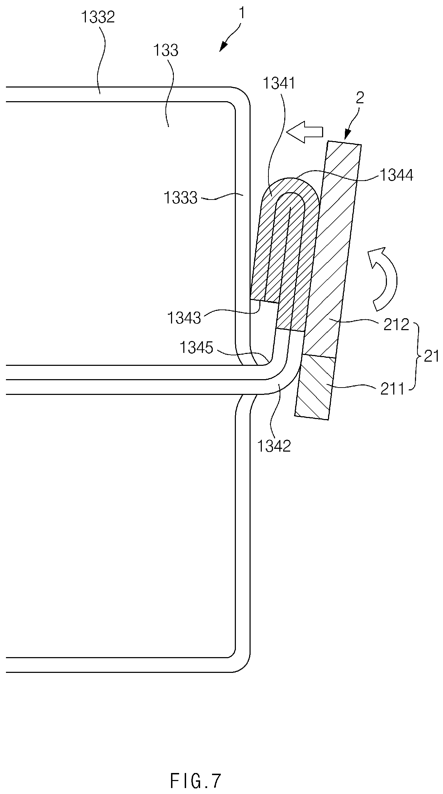

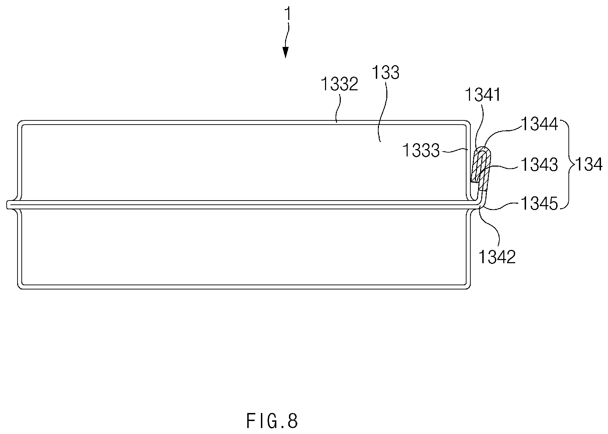

FIG. 7 is a schematic side view illustrating a state in which the pressing part 212 of the apparatus 2 for folding the side 134 presses the outer portion 1341 of the side 134 according to an embodiment of the present invention, and FIG. 8 is a schematic side view illustrating a state in which the side 134 is folded according to an embodiment of the present invention.

After the heating part 211 heats the inner portion 1342 of the side 134, the body 21 rotates so that the pressing part 212 presses the outer portion 1341 of the side 134. Here, it is preferable that the pressing part 212 presses a position that is far away from the second folding part 1345 of the side 134. This is because the pressing part 212 easily presses the side 134 at small torque as the pressing position is farther from the second folding part 1345, which serves as a rotation center of the side 134. For this, as illustrated in FIG. 7, a width of the body 21 is preferably formed to be longer than a width of the side 134.

When the heating part 211 heats the inner portion 1342 of the side 134, the first polymer of the sealant layer 1351 is softened. Thereafter, when the pressing part 212 presses the outer portion 1341 of the side 134, the first polymer of the sealant layer 1351 is deformed. Then, when a certain amount of time elapses in this state, the first polymer of the sealant layer 1351 is cooled and hardened. Accordingly, the pressing part 212 may press the outer portion 1341 for 0.5 seconds or more, preferably 1 second or more. If the pressing part 212 presses the outer portion 1341 for a time shorter than 0.5 seconds, the first polymer of the sealant layer 1351 may not be sufficiently hardened, and thus, the side 134 may be unfolded again.

The apparatus 2 for folding the side may further include a power part (not shown) for moving and rotating the body 21. The power part may move the body 21 to be adjacent to the side 134, move the heating part 211 to be in contact with the inner portion 1342, and rotate the pressing part 212 to press the outer portion 1341.

In this process, after the side 134 is folded toward the cup part 133 in the secondary battery 1, the side 134 may not adhere to the cup part 133 while being maintained in the folded state and thus may not be unfolded. Here, the side 134 may be folded at an angle of 85° to 95°, preferably an angle of 88° to 92° with respect to the second folding part 1345. In addition, the side 134 may be folded at a position adjacent to the cup part 133 so that the side 134 is in contact with the outer wall 1333 of the cup part 133. Particularly, when the side 134 is folded, it is preferable that the inner portion 1342 that is relatively closer to the cup part 133 is folded. Thus, the unnecessary volume of the secondary battery 1 may be further reduced. However, even in this case, the side 134 and the cup part 133 do not adhere to each other, and the retention force of the side 134 increases to maintain the folded state.

### Another embodiment

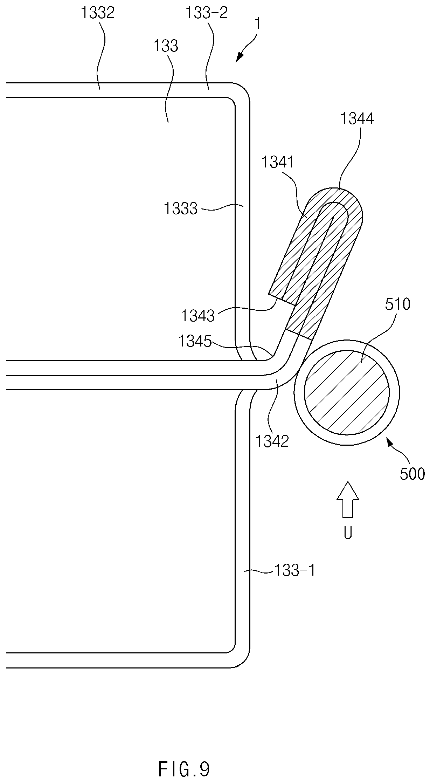

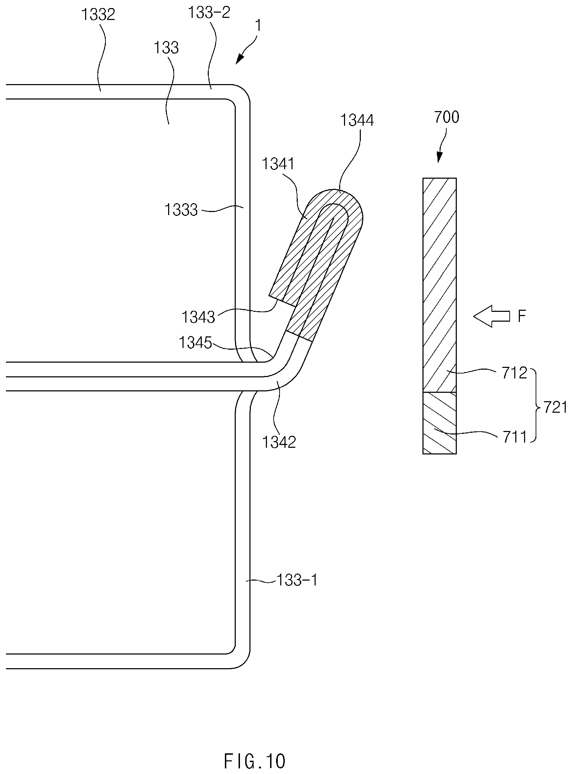

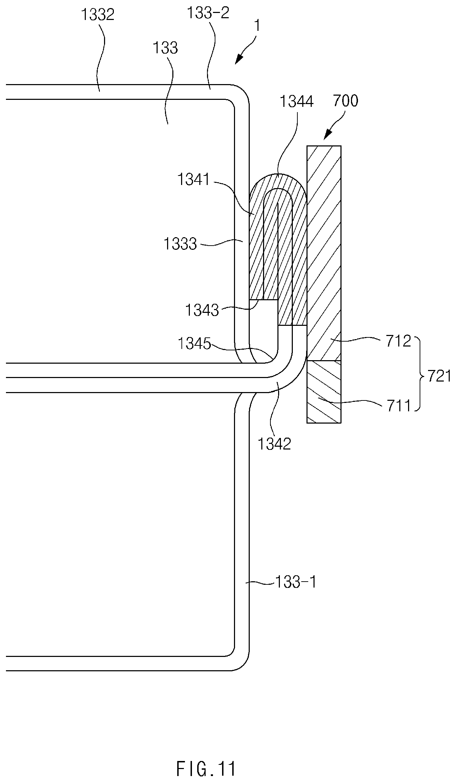

FIG. 9 is a schematic side view illustrating a state in which a first body of a first side folding device heats and presses the inner portion of the side according to another embodiment of the present invention. FIG. 10 is a schematic side view illustrating a state in which a second body of a second side folding device linearly moves in a direction closer to a cup part according to another embodiment of the present invention. FIG. 11 is a schematic side view illustrating a state in which a heating part of the second side folding device heats the inner portion of the side, and a pressing part presses an outer portion of the side according to another embodiment of the present invention.

Another embodiment of the present invention is different from the previously described embodiment in that a first side folding device 500 and a second side folding device 700 move linearly to perform an operation of folding the side 134.

The contents that are duplicated with the foregoing embodiment will be omitted as much as possible, and Embodiment 2 will be described with a focus on the differences. That is, it is obvious that the contents that are not described in another embodiment may be regarded as the contents of the foregoing embodiment if necessary.

Referring to FIGS. 9 to 11, an apparatus for folding a side according to another embodiment of the present invention may be an apparatus for folding a side 134 extending outward from a cup part 133 in a battery case 13 of a pouch-type secondary battery and include a first side folding device 500 and a second side folding device 700.

The first side folding device 500 may be a device for primarily folding the side 134 of the battery case 13. In addition, the second side folding device 700 may be a device for secondarily folding the side 134 of the battery case 13.

Referring to FIG. 9, the first side folding device 500 may include a first body 510 having a circular cross-section and disposed to be adjacent and elongated to the side 134 in a longitudinal direction of the secondary battery. The first body 510 may heat an inner portion 1342 disposed at a relatively inner side of the side 134 and press the inner portion 1342 in a direction in which the inner portion 1342 is folded.

A cup part 133 may include a first cup part 133-1 disposed at a lower side and a second cup part 133-2 disposed above the first cup part 133-1. A first body 510 of the first side folding device 500 may move upward from the lower side that is a direction from the first cup part 133-1 to the second cup part 133-2 to heat and press the inner portion 1342. FIG. 9 illustrates a state in which the first body 510 moves from the lower side to an upper direction U so as to be in contact with the inner portion 1342, thereby heating the inner portion 1342 and also pressing the inner portion 1342 in the folding direction.

Referring to FIGS. 10 and 11, the second side folding device 700 may include a second body 721 having a plate shape and disposed to be adjacent and elongated to the side 134 in a longitudinal direction of the secondary battery. Here, the second body 721 may include a heating part 711 and a pressing part 712. The heating part 711 may be disposed at one side of the second body 721 and may be configured to heat the inner portion 1342 disposed at a relatively inner side of the side 134. In addition, the pressing part 712 may be disposed at the other side of the second body 721 and may be configured to press the outer portion 1341 disposed at a relatively outer side of the side 134.

In the apparatus for folding the side according to another embodiment of the present invention, after the first side folding device 500 heats and presses the inner portion 1342 using the first body 510 (see FIG. 9), the second body 721 of the second side folding device 700 may move in a direction closer to the cup part 133 (see FIG. 10), and the heating part 711 may heat the inner portion 1342, and also, the pressing part 712 may press the outer portion 1341 to perform the folding of the side 134 (see FIG. 11).

In the apparatus for folding the side according to another embodiment of the present invention, after the first side folding device 500 heats and presses the inner portion 1342, when the second body 721 of the second side folding device 700 moves in the direction closer to the cup part 133, the second body 721 may linearly move in the direction closer to the cup part 133. That is, the second body 721 of the second side folding device 700 may not rotate but move linearly and may be closer to the cup part 133 to perform the operation of folding the side 134.

Here, the linear movement of the second body 721 may be linear movement moving along a virtual plane parallel to a plane formed by a bottom portion 1332 of the cup part 133. That is, the second body 721 may perform the folding operation while not moving in a downward direction toward the first cup part 133-1 or in an upward direction toward the second cup part 133-2, but moving linearly in only a direction F that is closer to the side 134.

A method for folding the side 134 using the apparatus for folding the side according to another embodiment of the present invention is as follows.

Referring to FIGS. 9 to 11, a method for folding the side 134 according to another embodiment of the present invention may be a method for folding a side 134 extending outward from a cup part 133 in a battery case 13 of a pouch-type secondary battery and include a process of primarily folding the side 134 and a process of secondarily folding the side 134. The process of primarily folding the side 134 may be a process of primarily folding the side 134 using a first side folding device 500. The process of secondarily folding the side 134 may be a process of secondarily folding the side 134 using a second side folding device 700.

Referring to FIG. 9, the process of primarily folding side 134 may be a process of heating an inner portion 1342 disposed at a relatively inner side of the side 134 and pressing the inner portion 1342 in a direction, in which the inner portion 1342 is folded, by using a first body 510 of the first side folding device 500 including the first body 510 having a circular cross-section and disposed to be adjacent and elongated to the side 134 in a longitudinal direction of the secondary battery.

Referring to FIGS. 10 and 11, the process of secondarily folding side 134 may be a process, in which a second body 721 of the second side folding device 700 including the second body 721 having a plate shape and disposed to be adjacent and elongated to the side 134 in the longitudinal direction of the secondary battery moves in a direction closer to the cup part 133 (see FIG. 10) to heat the inner portion 1342 through a heating part disposed at one side thereof and press an outer portion 1341, which is disposed at a relatively outer side of the side 134, through a pressing part 712 disposed at the other side thereof (see FIG. 11). Here, the process of secondarily folding the side 134 may be a process that is performed after the process of primarily folding the side 134.

In the method for folding the side 134 according to another embodiment of the present invention, the cup part 133 may include a first cup part 133-1 disposed at a lower side and a second cup part 133-2 disposed above the first cup part 133-1. In the process of primarily the side 134, the first body 510 of the first side folding device 500 may move upward from the lower side that is a direction from the first cup part 133-1 to the second cup part 133-2 to heat and press the inner portion 1342.

Also, in the process of secondarily folding the side 134, when the second body 721 of the second side folding device 700 moves in the direction closer to the cup part 133, the second body 721 may move linearly in the direction F closer to the cup part 133. Also, in this case, the linear movement of the second body 721 may be linear movement moving along a virtual plane parallel to a plane formed by a bottom portion 1332 of the cup part 133.

As described above, the apparatus and method for folding the side according to another embodiment of the present invention may have an advantage of being able to perform the folding operation while the first body 510 of the first side folding device 500 and the second body 721 of the second side folding device 700 move linearly without rotating.

In addition, the first body 510 may perform the operation of heating the inner portion 1342 of the side 134, and then, the second body 721 may also perform the operation of heating the inner portion 1342. Thus, it may have an advantage of being able to relatively reduce a minimum required time for the heating operation.

Those with ordinary skill in the technical field of the present invention pertains will be understood that the present invention can be carried out in other specific forms without changing the technical idea or essential features. Therefore, the above-disclosed embodiments are to be considered illustrative and not restrictive. Accordingly, the scope of the present invention is defined by the appended claims rather than the foregoing description and the exemplary embodiments described therein. Various modifications made within the meaning of an equivalent of the claims of the invention and within the claims are to be regarded to be in the scope of the present invention.

**[Description of the Symbols]**

| | | | |
|---|---|---|---|
| 1: | Secondary battery | 2: | Apparatus for folding side |
| 10: | Electrode assembly | 11: | Electrode tab |
| 12: | Electrode lead | 13: | Battery case |
| 14: | insulation part | 21: | Body |
| 111: | Positive electrode tab | 112: | Negative electrode tab |
| 121: | Positive electrode lead | 122: | Negative electrode lead |
| 131: | First case | 132: | Second case |
| 133: | Cup part | 134: | Side |
| 135: | Pouch film | 136: | Bridge |
| 137: | Degassing part | 211: | Heating part |
| 212: | Pressing part | 1331: | Accommodation space |
| 1332: | Bottom portion | 1333: | Outer wall |
| 1341: | Outer portion | 1342: | Inner portion |
| 1343: | Outer end 1 | 344: | First folding part |
| 1345: | Second folding part | 1352: | Sealant layer |
| 1352: | Moisture barrier layer | 1353: | Surface protection layer |
| 1354: | Drawing assistance layer | | |
| 500: | First side folding device | | |
| 510: | First body | | |
| 700: | Second side folding device | | |
| 721: | Second body | | |
| 711: | Heating part | | |
| 712: | Pressing part | | |

## Claims

1. An apparatus (2) for folding a side (134), which folds a side (134) extending outward from a cup part (133) in a battery case (13) of a pouch-type secondary battery (1), the apparatus (2) comprising:
a body (21) having a plate shape, adjacent to the side (134) of the battery case (13), and disposed to be elongated in a longitudinal direction of the secondary battery (1),
wherein the body (21) comprises:
a heating part (211) disposed at one side thereof to heat an inner portion (1342) disposed at a relatively inner side of the side (134) of the battery case (13); and
a pressing part (212) disposed at the other side thereof to press an outer portion (1341) disposed at a relatively outer side of the side (134) of the battery case (13),
wherein, when the heating part (211) heats the inner portion (1342), the body (21) rotates to allow the pressing part (212) to press the outer portion (1341),
wherein the heating part (211) heats the inner portion (1342) at a temperature of 165°C to 220°C for a time of 1 second to 3 seconds.

2. The apparatus of claim 1, wherein the heating part (211) comprises a heating coil, which receives power from the outside to generate heat, therein.

3. The apparatus of claim 1, wherein the heating part (211) comprises a tube in which a fluid flows.

4. A method for folding a side (134), the method comprising:
allowing a body (21) having a plate shape to be disposed adjacent to side (134) of the battery case (13) and to be elongated in a longitudinal direction of a secondary battery (1);
allowing a heating part (211) disposed at one side of the body (21) to be in contact with an inner portion (1342) disposed at a relatively inner side of the side (134) of the battery case (13), thereby heating the inner portion (1342); and
allow the body (21) to rotate so that a pressing part (212) disposed at the other side of the body (21) presses an outer portion (1341) disposed at a relatively outer side of the side (134) of the battery case (13),
wherein, in the heating of the inner portion (1342), the heating part (211) heats the inner portion (1342) at a temperature of 165°C to 220°C for a time of 1 second to 3 seconds.

5. The method of claim 4, wherein the inner portion (1342) of the side (134) of the battery case (13) is not sealed, and the outer portion (1341) of the side (134) of the battery case (13) is sealed.

6. The method of claim 5, wherein the side (134) of the battery case (13) does not adhere to the cup part (133) and is folded at the inner portion (1342).

7. The method of claim 6, wherein the side (134) of the battery case (13) is in contact with an outer wall (1333) of the cup part (133) and is folded.

8. The method of claim 4, wherein the side (134) of the battery case (13) comprises:
a first folding part (1344) folded at a position that is relatively closer to an outer end (1343); and
a second folding part (1345) folded at a position that is relatively closer to the cup part (133).

9. The method of claim 8, wherein the first folding part (1344) is disposed at the outer portion (1341), and
the second folding part (1345) is disposed at the inner portion (1342).

10. The method of claim 8, wherein the side (134) of the battery case (13) is folded at an angle of 170° to 180° with respect to the first folding part (1344).

11. The method of claim 8, wherein the side (134) of the battery case (13) is folded at an angle of 85° to 95° with respect to the second folding part (1345).

12. The method of claim 11, wherein the side (134) of the battery case (13) is folded at an angle of 88° to 92° with respect to the second folding part (1345).

13. The method of claim 4, wherein the battery case (13) is manufactured by molding a pouch film (135), and
the pouch film (135) comprises:
a sealant layer (1352) made of a first polymer and formed at the innermost layer;
a surface protection layer (1353) made of a second polymer and formed at the outermost layer; and
a gas barrier layer made of a metal containing an AA80XX-based aluminum alloy and laminated between the surface protection layer (1353) and the sealant layer (1352),
wherein the gas barrier layer has a thickness of 50 µm to 80 µm, and
the sealant layer (1352) has a thickness of 60 µm to 100 µm.

14. An apparatus (2) for folding a side (134), which folds a side (134) extending outward from a cup part (133) in a battery case (13) of a pouch-type secondary battery (1), wherein the cup part (133) comprises a first cup part (133-1) disposed at a lower side, and a second cup part (133-2) disposed above the first cup part (133-1),
the apparatus (2) comprising:
a first side folding device (500) configured to primarily fold the side (134) of the battery case (13); and
a second side folding device (700) configured to secondarily fold the side (134) of the battery case (13)
wherein the first side folding device (500) comprises a first body (510) having a circular shape, adjacent to the side (134), and disposed to be elongated in a longitudinal direction of the secondary battery (1), wherein the first body (510) heats an inner portion (1342) disposed at a relatively inner side of the side (134) of the battery case (13) and presses the inner portion in a direction in which the inner portion (1342) is folded,
wherein the first body (510) of the first side folding device (500) moves upward from a lower side that is a direction from the first cup part (133-1) to the second cup part (133-2) to heat and press the inner portion (1342), and
the second side folding device (700) comprises a second body (721) having a plate shape, adjacent to the side (134) of the battery case (13), and disposed to be elongated in the longitudinal direction of the secondary battery (1), wherein the second body (721) comprises: a heating part (711) disposed at one side thereof to heat the inner portion (1342) disposed at the relatively inner side of the side (134) of the battery case (13) and a pressing part (712) disposed at the other side to press an outer portion (1341) disposed at a relatively outer side of the side (134) of the battery case (13),
wherein, after the first side folding device (500) heats and presses the inner portion (1342) by using the first body (510), the second body (721) of the second side folding device (700) moves in a direction closer to the cup part (133) so that the heating part (711) heats the inner portion, and the pressing part (712) presses the outer portion,
wherein the heating part (711) heats the inner portion (1342) at a temperature of 165°C to 220°C for a time of 1 second to 3 seconds.

15. The apparatus (2) of claim 14, wherein, after the first side folding device (500) heats and presses the inner portion (1342), when the second body (721) of the second side folding device (700) moves in the direction closer to the cup part (133), the second body (721) linearly moves in the direction closer to the cup part (133).

16. The apparatus (2) of claim 15, wherein the linear movement of the second body (721) is linear movement moving along a virtual plane parallel to a plane formed by a bottom portion of the cup part (133).

17. A method for folding a side (134) which extends outward from a cup part (133) in a battery case (13) of a pouch-type secondary battery (1), wherein the cup part (133) comprises a first cup part (133-1) disposed at a lower side, and a second cup part (133-2) disposed above the first cup part (133-1),
the method comprising:
a primary side folding process of primarily folding the side by using a first side folding device (500); and
a secondary side folding process of secondarily folding the side by using a second side folding device (700),
wherein the primary side folding process comprises a process of heating an inner portion (1342) disposed at a relatively inner side of the side and pressing the inner portion (1342) in a direction, in which the inner portion (1342) is folded, by using a first body (510) of the first side folding device (500) comprising the first body (510) having a circular shape, adjacent to the side (134) of the battery case (13), and disposed to be elongated in a longitudinal direction of the secondary battery (1),
wherein, in the primary side folding process, the first body (510) of the first side folding device (500) moves upward from a lower side that is a direction from the first cup part (133-1) to the second cup part (133-2) to heat and press the inner portion (1342), and
the secondary side folding process performed after the primary side folding process comprises a process of heating the inner portion (1342) through a heating part (711) disposed at one side thereof and pressing an outer portion (1341) disposed at a relatively outer side of the side (134) of the battery case (13) through a pressing part (712) disposed at the other side thereof while moving a second body (721) of the second side folding device (700), which comprises the second body (721) having a plate shape, adjacent to the side (134) of the battery case (13), and disposed to be elongated in the longitudinal direction of the secondary battery (1), in a direction closer to the cup part (133),
wherein, in the heating of the inner portion (1342), the heating part (711) heats the inner portion (1342) at a temperature of 165°C to 220°C for a time of 1 second to 3 seconds.

18. The method of claim 17, wherein, in the secondary side folding process, when the second body (721) of the second side folding device (700) moves in the direction closer to the cup part (133), the second body (721) linearly moves in the direction closer to the cup part (133).

19. The apparatus of claim 18, wherein the linear movement of the second body (721) is linear movement moving along a virtual plane parallel to a plane formed by a bottom portion of the cup part (133).

## Patentansprüche

1. Vorrichtung (2) zum Falten einer Seite (134), welche eine Seite (134) faltet, welche sich nach außen von einem Tassenteil (133) in einem Batteriegehäuse (13) einer Sekundärbatterie (1) vom Beuteltyp erstreckt, die Vorrichtung (2) umfassend:
einen Körper (21), welcher eine Plattenform aufweist, benachbart zu der Seite (134) des Batteriegehäuses (13), und dazu angeordnet, in einer longitudinalen Richtung der Sekundärbatterie (1) länglich zu sein,
wobei der Körper (21) umfasst:
einen Heizteil (211), welcher an einer Seite davon angeordnet ist, um einen inneren Abschnitt (1342) zu heizen, welcher an einer relativ inneren Seite der Seite (134) des Batteriegehäuses (13) angeordnet ist; und
einen Pressteil (212), welcher an der anderen Seite davon angeordnet ist, um einen äußeren Abschnitt (1341) zu pressen, welcher an einer relativ äußeren Seite der Seite (134) des Batteriegehäuses (13) angeordnet ist,
wobei, wenn der Heizteil (211) den inneren Abschnitt (1342) heizt, der Körper (21) rotiert, um es dem Pressteil (212) zu erlauben, den äußeren Abschnitt (1341) zu pressen,
wobei der Heizteil (211) den inneren Abschnitt (1342) bei einer Temperatur von 165°C bis 220°C für eine Zeit von 1 Sekunde bis 3 Sekunden heizt.

2. Vorrichtung nach Anspruch 1, wobei der Heizteil (211) eine Heizspule umfasst, welche Leistung von der Außenseite erhält, um darin Wärme zu erzeugen.

3. Vorrichtung nach Anspruch 1, wobei der Heizteil (211) ein Rohr umfasst, in welchem ein Fluid strömt.

4. Verfahren zum Falten einer Seite (134), das Verfahren umfassend:
Erlauben eines Körpers (21), welcher eine Plattenform aufweist, benachbart zu der Seite (134) des Batteriegehäuses (13) angeordnet zu werden und in einer longitudinalen Richtung einer Sekundärbatterie (1) länglich zu sein;
Erlauben eines Heizteils (211), welcher an einer Seite des Körpers (21) angeordnet ist, in Kontakt mit einem inneren Abschnitt (1342) zu sein, welcher an einer relativ inneren Seite der Seite (134) des Batteriegehäuses (13) angeordnet ist, wodurch der innere Abschnitt (1342) geheizt wird; und
Erlauben des Körpers (21), derart zu rotieren, dass ein Pressteil (212), welcher an der anderen Seite des Körpers (21) angeordnet ist, einen äußeren Abschnitt (1341) presst, welcher an einer relativ äußeren Seite der Seite (134) des Batteriegehäuses (13) angeordnet ist,
wobei, beim Heizen des inneren Abschnitts (1342) der Heizteil (211) den inneren Abschnitt (1342) bei einer Temperatur von 165°C bis 220°C für eine Zeit von 1 Sekunde bis 3 Sekunden heizt.

5. Verfahren nach Anspruch 4, wobei der innere Abschnitt (1342) der Seite (134) des Batteriegehäuses (13) nicht abgedichtet ist und der äußere Abschnitt (1341) der Seite (134) des Batteriegehäuses (13) abgedichtet ist.

6. Verfahren nach Anspruch 5, wobei die Seite (134) des Batteriegehäuses (13) nicht an dem Tassenteil (133) anhaftet und an dem inneren Abschnitt (1342) gefaltet wird.

7. Verfahren nach Anspruch 6, wobei die Seite (134) des Batteriegehäuses (13) in Kontakt mit einer äußeren Wand (1333) des Tassenteils (133) steht und gefaltet wird.

8. Verfahren nach Anspruch 4, wobei die Seite (134) des Batteriegehäuses (13) umfasst:
einen ersten Faltteil (1344), welcher an einer Position gefaltet wird, welche relativ näher zu einem äußeren Ende (1343) ist; und
einen zweiten Faltteil (1345), welcher an einer Position gefaltet wird, welche relativ näher zu dem Tassenteil (133) ist.

9. Verfahren nach Anspruch 8, wobei der erste Faltteil (1344) an dem äußeren Abschnitt (1341) angeordnet wird, und
der zweite Faltteil (1345) an dem inneren Abschnitt (1342) angeordnet wird.

10. Verfahren nach Anspruch 8, wobei die Seite (134) des Batteriegehäuses (13) bei einem Winkel von 170° bis 180° bezüglich dem ersten Faltteil (1344) gefaltet wird.

11. Verfahren nach Anspruch 8, wobei die Seite (134) des Batteriegehäuses (13) bei einem Winkel von 85° bis 95° bezüglich dem zweiten Faltteil (1345) gefaltet wird.

12. Verfahren nach Anspruch 11, wobei die Seite (134) des Batteriegehäuses (13) bei einem Winkel von 88° bis 92° bezüglich dem zweiten Faltteil (1345) gefaltet wird.

13. Verfahren nach Anspruch 4, wobei das Batteriegehäuse (13) durch Formen eines Beutelfilms (135) gefertigt wird, und
der Beutelfilm (135) umfasst:
eine Dichtungsschicht (1352), welche aus einem ersten Polymer hergestellt und an der innersten Schicht gebildet wird;
eine Flächen-Schutzschicht (1353), welche aus einem zweiten Polymer hergestellt und an der äußersten Schicht gebildet wird; und
eine Gasbarriere-Schicht, welche aus einem Metall hergestellt wird, welches eine AA80XX-basierte Aluminiumlegierung enthält und zwischen die Flächen-Schutzschicht (1353) und die Dichtungsschicht (1352) laminiert wird,
wobei die Gasbarriere-Schicht eine Dicke von 50 µm bis 80 µm aufweist, und
die Dichtungsschicht (1352) eine Dicke von 60 µm bis 100 µm aufweist.

14. Vorrichtung (2) zum Falten einer Seite (134), welche eine Seite (134) faltet, welche sich nach außen von einem Tassenteil (133) in einem Batteriegehäuse (13) einer Sekundärbatterie (1) vom Beuteltyp erstreckt, wobei der Tassenteil (133) einen ersten Tassenteil (133-1), welcher an einer unteren Seite angeordnet ist, und einen zweiten Tassenteil (133-2) umfasst, welcher oberhalb des ersten Tassenteils (133-1) angeordnet ist,
die Vorrichtung (2) umfassend:
eine erste Seiten-Faltvorrichtung (500), welche dazu eingerichtet ist, primär die Seite (134) des Batteriegehäuses (13) zu falten; und
eine zweite Seiten-Faltvorrichtung (700), welche dazu eingerichtet ist, sekundär die Seite (134) des Batteriegehäuses (13) zu falten,
wobei die erste Seiten-Faltvorrichtung (500) einen ersten Körper (510) umfasst, welcher eine kreisförmige Form aufweist, benachbart zu der Seite (134) ist und dazu angeordnet ist, länglich in einer longitudinalen Richtung der Sekundärbatterie (1) zu sein, wobei der erste Körper (510) einen inneren Abschnitt (1342) heizt, welcher an einer relativ inneren Seite der Seite (134) des Batteriegehäuses (13) angeordnet ist und den inneren Abschnitt in eine Richtung presst, in welche der innere Abschnitt (1342) gefaltet wird,
wobei sich der erste Körper (510) der ersten Seiten-Faltvorrichtung (500) nach oben von einer unteren Seite bewegt, welche eine Richtung von dem ersten Tassenteil (133-1) zu dem zweiten Tassenteil (133-2) ist, um den inneren Abschnitt (1342) zu heizen und pressen, und
die zweite Seiten-Faltvorrichtung (700) einen zweiten Körper (721) umfasst, welcher eine Plattenform aufweist, benachbart zu der Seite (134) des Batteriegehäuses (13) ist, und dazu angeordnet ist, länglich in der longitudinalen Richtung der Sekundärbatterie (1) zu sein, wobei der zweite Körper (721) umfasst: einen Heizteil (711), welcher an einer Seite davon angeordnet ist, um den inneren Abschnitt (1342) zu heizen, welcher an der relativ inneren Seite der Seite (134) des Batteriegehäuses (13) angeordnet ist; und einen Pressteil (712), welcher an der anderen Seite angeordnet ist, um einen äußeren Abschnitt (1341) zu pressen, welcher an einer relativ äußeren Seite der Seite (134) des Batteriegehäuses (13) angeordnet ist,
wobei, nachdem die erste Seiten-Faltvorrichtung (500) den inneren Abschnitt (1342) durch Verwenden des ersten Körpers (510) heizt und presst, sich der zweite Körper (721) der zweiten Seiten-Faltvorrichtung (700) in eine Richtung näher zu dem Tassenteil (133) bewegt, so dass der Heizteil (711) den inneren Abschnitt heizt und der Pressteil (712) den äußeren Abschnitt presst,
wobei der Heizteil (711) den inneren Abschnitt (1342) bei einer Temperatur von 165°C bis 220°C für eine Zeit von 1 Sekunde bis 3 Sekunden heizt.

15. Vorrichtung (2) nach Anspruch 14, wobei, nachdem die erste Seiten-Faltvorrichtung (500) den inneren Abschnitt (1342) heizt und presst, wenn sich der zweite Körper (721) der zweiten Seiten-Faltvorrichtung (700) in die Richtung näher zu dem Tassenteil (133) bewegt, sich der zweite Körper (721) linear in die Richtung näher zu dem Tassenteil (133) bewegt.

16. Vorrichtung (2) nach Anspruch 15, wobei die lineare Bewegung des zweiten Körpers (721) eine lineare Bewegung ist, welche sich entlang einer virtuellen Ebene parallel zu einer Ebene bewegt, welche durch einen unteren Abschnitt des Tassenteils (133) gebildet ist.

17. Verfahren zum Falten einer Seite (134), welche sich nach außen von einem Tassenteil (133) in einem Batteriegehäuse (13) einer Sekundärbatterie (1) vom Beuteltyp erstreckt, wobei der Tassenteil (133) einen ersten Tassenteil (133-1), welcher an einer unteren Seite angeordnet ist, und einen zweiten Tassenteil (133-2) umfasst, welcher oberhalb des ersten Tassenteils (133-1) angeordnet ist,
das Verfahren umfassend:
einen primären Seiten-Faltprozess eines primären Faltens der Seite durch Verwenden einer ersten Seiten-Faltvorrichtung (500); und
einen sekundären Seiten-Faltprozess eines sekundären Faltens der Seite durch Verwenden einer zweiten Seiten-Faltvorrichtung (700),
wobei der primäre Seiten-Faltprozess einen Prozess eines Heizens eines inneren Abschnitts (1342), welcher an einer relativ inneren Seite der Seite angeordnet ist, und eines Pressens des inneren Abschnitts (1342) in eine Richtung umfasst, in welche der innere Abschnitt (1342) gefaltet wird, indem ein erster Körper (510) der ersten Seiten-Faltvorrichtung (500) verwendet wird, welche den ersten Körper (510) umfasst, welcher eine kreisförmige Form aufweist, benachbart zu der Seite (134) des Batteriegehäuses (13) ist und dazu angeordnet ist, länglich in einer longitudinalen Richtung der Sekundärbatterie (1) zu sein,
wobei sich in dem primären Seiten-Faltprozess der erste Körper (510) der ersten Seiten-Faltvorrichtung (500) nach oben von einer unteren Seite bewegt, welches eine Richtung von dem ersten Tassenteil (133-1) zu dem zweiten Tassenteil (133-2) ist, um den inneren Abschnitt (1342) zu heizen und pressen, und
der sekundäre Seiten-Faltprozess, welcher nach dem primären Seiten-Faltprozess durchgeführt wird, einen Prozess eines Heizens des inneren Abschnitts (1342) durch einen Heizteil (711) umfasst, welcher an einer Seite davon angeordnet ist, sowie ein Pressen eines äußeren Abschnitts (1341), welcher an einer relativ äußeren Seite der Seite (134) des Batteriegehäuses (13) angeordnet ist, durch einen Pressteil (712), welcher an der anderen Seite davon angeordnet ist, während ein zweiter Körper (721) der zweiten Seiten-Faltvorrichtung (700) bewegt wird, welche den zweiten Körper (721) umfasst, welcher eine Plattenform aufweist, benachbart zu der Seite (134) des Batteriegehäuses (13) ist, und dazu angeordnet ist, länglich in der longitudinalen Richtung der Sekundärbatterie (1) in einer Richtung näher zu dem Tassenteil (133) zu sein,
wobei in dem Heizen des inneren Abschnitts (1342) der Heizteil (711) den inneren Abschnitt (1342) bei einer Temperatur von 165°C bis 220°C für eine Zeit von 1 Sekunde bis 3 Sekunden heizt.

18. Verfahren nach Anspruch 17, wobei in dem sekundären Seiten-Faltprozess, wenn sich der zweite Körper (721) der zweiten Seiten-Faltvorrichtung (700) in die Richtung näher zu dem Tassenteil (133) bewegt, sich der zweite Körper (721) linear in die Richtung näher zu dem Tassenteil (133) bewegt.

19. Vorrichtung nach Anspruch 18, wobei die lineare Bewegung des zweiten Körpers (721) eine lineare Bewegung ist, welche sich entlang einer virtuellen Ebene parallel zu einer Ebene bewegt, welche durch einen unteren Abschnitt des Tassenteils (133 gebildet ist.

## Revendications

1. Appareil (2) de pliage d'un côté (134), qui plie un côté (134) s'étendant vers l'extérieur depuis une partie récipient (133) dans un boîtier de batterie (13) d'une batterie secondaire de type poche (1), l'appareil (2) comprenant :
un corps (21) présentant une forme de plaque, adjacent au côté (134) du boîtier de batterie (13), et disposé pour s'étendre dans une direction longitudinale de la batterie secondaire (1),
dans lequel le corps (21) comprend :
une partie chauffante (211) disposée sur un côté de celui-ci pour chauffer une partie interne (1342) disposée sur un côté relativement interne du côté (134) du boîtier de batterie (13) ; et
une partie de pression (212) disposée sur l'autre côté de celui-ci pour appuyer sur une partie externe (1341) disposée sur un côté relativement externe du côté (134) du boîtier de batterie (13),
dans lequel, lorsque la partie chauffante (211) chauffe la partie interne (1342), le corps (21) tourne pour permettre à la partie de pression (212) d'appuyer sur la partie externe (1341),
dans lequel la partie chauffante (211) chauffe la partie interne (1342) à une température de 165 °C à 220 °C pendant une durée de 1 seconde à 3 secondes.

2. Appareil selon la revendication 1, dans lequel la partie chauffante (211) comprend une bobine chauffante, qui reçoit de l'énergie de l'extérieur pour générer de la chaleur, à l'intérieur de celle-ci.

3. Appareil selon la revendication 1, dans lequel la partie chauffante (211) comprend un tube dans lequel s'écoule un fluide.

4. Procédé de pliage d'un côté (134), le procédé comprenant :
le fait de permettre à un corps (21) présentant une forme de plaque d'être disposé de manière adjacente au côté (134) du boîtier de batterie (13) et de s'étendre dans une direction longitudinale d'une batterie secondaire (1) ;
le fait de permettre à une partie chauffante (211) disposée sur un côté du corps (21) d'être en contact avec une partie interne (1342) disposée sur un côté relativement interne du côté (134) du boîtier de batterie (13), chauffant ainsi la partie interne (1342) ; et
le fait de permettre au corps (21) de tourner de sorte qu'une partie de pression (212) disposée sur l'autre côté du corps (21) appuie sur une partie externe (1341) disposée sur un côté relativement externe du côté (134) du boîtier de batterie (13),
dans lequel, lors du chauffage de la partie interne (1342), la partie chauffante (211) chauffe la partie interne (1342) à une température de 165 °C à 220 °C pendant une durée de 1 seconde à 3 secondes.

5. Procédé selon la revendication 4, dans lequel la partie interne (1342) du côté (134) du boîtier de batterie (13) n'est pas scellée, et
la partie externe (1341) du côté (134) du boîtier de batterie (13) est scellée.

6. Procédé selon la revendication 5, dans lequel le côté (134) du boîtier de batterie (13) n'adhère pas à la partie récipient (133) et est plié au niveau de la partie interne (1342).

7. Procédé selon la revendication 6, dans lequel le côté (134) du boîtier de batterie (13) est en contact avec une paroi extérieure (1333) de la partie récipient (133) et est plié.

8. Procédé selon la revendication 4, dans lequel le côté (134) du boîtier de batterie (13) comprend :
une première partie de pliage (1344) pliée en une position qui est relativement plus proche d'une extrémité extérieure (1343) ; et
une deuxième partie de pliage (1345) pliée en une position qui est relativement plus proche de la partie récipient (133).

9. Procédé selon la revendication 8, dans lequel la première partie de pliage (1344) est disposée au niveau de la partie externe (1341), et
la deuxième partie de pliage (1345) est disposée au niveau de la partie interne (1342).

10. Procédé selon la revendication 8, dans lequel le côté (134) du boîtier de batterie (13) est plié à un angle de 170° à 180° par rapport à la première partie de pliage (1344).

11. Procédé selon la revendication 8, dans lequel le côté (134) du boîtier de batterie (13) est plié à un angle de 85° à 95° par rapport à la deuxième partie de pliage (1345).

12. Procédé selon la revendication 11, dans lequel le côté (134) du boîtier de batterie (13) est plié à un angle de 88° à 92° par rapport à la deuxième partie de pliage (1345).

13. Procédé selon la revendication 4, dans lequel le boîtier de batterie (13) est fabriqué par moulage d'un film de poche (135), et
le film de poche (135) comprend :
une couche d'étanchéité (1352) en un premier polymère et formée au niveau de la couche la plus interne ;
une couche de protection de surface (1353) en un deuxième polymère et formée au niveau de la couche la plus externe ; et
une couche barrière de gaz en un métal contenant un alliage d'aluminium à base d'AA80XX et stratifiée entre la couche de protection de surface (1353) et la couche d'étanchéité (1352),
dans lequel la couche barrière de gaz présente une épaisseur de 50 µm à 80 µm, et
la couche d'étanchéité (1352) présente une épaisseur de 60 µm à 100 µm.

14. Appareil (2) de pliage d'un côté (134), qui plie un côté (134) s'étendant vers l'extérieur depuis une partie récipient (133) dans un boîtier de batterie (13) d'une batterie secondaire de type poche (1), dans lequel la partie récipient (133) comprend une première partie récipient (133-1) disposée sur un côté inférieur, et une deuxième partie récipient (133-2) disposée au-dessus de la première partie récipient (133-1), l'appareil (2) comprenant :
un premier dispositif de pliage de côté (500) configuré pour plier en premier lieu le côté (134) du boîtier de batterie(13) ; et
un deuxième dispositif de pliage de côté (700) configuré pour plier en deuxième lieu le côté (134) du boîtier de batterie (13),
dans lequel le premier dispositif de pliage de côté (500) comprend un premier corps (510) présentant une forme circulaire, adjacent au côté (134), et disposé pour s'étendre dans une direction longitudinale de la batterie secondaire (1), dans lequel le premier corps (510) chauffe une partie interne (1342) disposée sur un côté relativement interne du côté (134) du boîtier de batterie (13) et appuie sur la partie interne dans une direction dans laquelle la partie interne (1342) est pliée,
dans lequel le premier corps (510) du premier dispositif de pliage de côté (500) se déplace vers le haut à partir d'un côté inférieur, qui est une direction de la première partie récipient (133-1) à la deuxième partie récipient (133-2), pour chauffer et appuyer sur la partie interne (1342), et
le deuxième dispositif de pliage de côté (700) comprend un deuxième corps (721) présentant une forme de plaque, adjacent au côté (134) du boîtier de batterie (13), et disposé pour s'étendre dans la direction longitudinale de la batterie secondaire (1), dans lequel le deuxième corps (721) comprend : une partie chauffante (711) disposée sur un côté de celui-ci pour chauffer la partie interne (1342) disposée sur le côté relativement interne (134) du boîtier de batterie (13) ; et une partie de pression (712) disposée sur l'autre côté pour appuyer sur une partie externe (1341) disposée sur un côté relativement externe du côté (134) du boîtier de batterie (13).
dans lequel, après que le premier dispositif de pliage de côté (500) chauffe et appuie sur la partie interne (1342) en utilisant le premier corps (510), le deuxième corps (721) du deuxième dispositif de pliage de côté (700) se déplace dans une direction pour s'approcher de la partie récipient (133) de sorte que la partie chauffante (711) chauffe la partie interne, et la partie de pression (712) appuie sur la partie externe,
dans lequel la partie chauffante (711) chauffe la partie interne (1342) à une température de 165 °C à 220 °C pendant une durée de 1 seconde à 3 secondes.

15. Appareil (2) selon la revendication 14, dans lequel, après que le premier dispositif de pliage de côté (500) chauffe et appuie sur la partie interne (1342), lorsque le deuxième corps (721) du deuxième dispositif de pliage de côté (700) se déplace dans la direction pour s'approcher de la partie récipient (133), le deuxième corps (721) se déplace linéairement dans la direction pour s'approcher de la partie récipient (133).

16. Appareil (2) selon la revendication 15, dans lequel le mouvement linéaire du deuxième corps (721) est un mouvement linéaire se déplaçant le long d'un plan virtuel parallèle à un plan formé par une partie de fond de la partie récipient (133).

17. Procédé de pliage d'un côté (134) qui s'étend vers l'extérieur depuis une partie récipient (133) dans un boîtier de batterie (13) d'une batterie secondaire de type poche (1), dans lequel la partie récipient (133) comprend une première partie récipient (133-1) disposée sur un côté inférieur, et une deuxième partie récipient (133-2) disposée au-dessus de la première partie récipient (133-1),
le procédé comprenant :
un processus primaire de pliage de côté pour plier, en premier lieu, le côté en utilisant un premier dispositif de pliage de côté (500) ; et
un processus secondaire de pliage de côté pour plier, en deuxième lieu, le côté en utilisant un deuxième dispositif de pliage de côté (700),
dans lequel le processus primaire de pliage de côté comprend un processus de chauffage d'une partie interne (1342) disposée sur un côté relativement interne du côté et pression de la partie interne (1342) dans une direction, dans lequel la partie interne (1342) est pliée, en utilisant un premier corps (510) du premier dispositif de pliage de côté (500) comprenant le premier corps (510) présentant une forme circulaire, adjacent au côté (134) du boîtier de batterie (13), et disposé pour s'étendre dans une direction longitudinale de la batterie secondaire (1),
dans lequel, au cours du processus primaire de pliage de côté, le premier corps (510) du premier dispositif de pliage de côté (500) se déplace vers le haut à partir d'un côté inférieur qui est une direction de la première partie récipient (133-1) à la deuxième partie récipient (133-2) pour chauffer et appuyer sur la partie interne (1342), et
le processus secondaire de pliage de côté réalisé après le processus primaire de pliage de côté comprend un processus de chauffage de la partie interne (1342), par l'intermédiaire d'une partie chauffante (711) disposée sur un côté de celui-ci, et pression d'une partie externe (1341) disposée sur un côté relativement externe du côté (134) du boîtier de batterie (13), par l'intermédiaire d'une partie de pression (712) disposée sur l'autre côté de celui-ci, tout en déplaçant un deuxième corps (721) du deuxième dispositif de pliage de côté (700), qui comprend le deuxième corps (721) présentant une forme de plaque, adjacent au côté (134) du boîtier de batterie (13), et disposé pour s'étendre dans la direction longitudinale de la batterie secondaire (1), dans une direction pour s'approcher de la partie récipient (133),
dans lequel, lors du chauffage de la partie interne (1342), la partie chauffante (711) chauffe la partie interne (1342) à une température de 165 °C à 220 °C pendant une durée de 1 seconde à 3 secondes.

18. Procédé selon la revendication 17, dans lequel, au cours du processus secondaire de pliage de côté, lorsque le deuxième corps (721) du deuxième dispositif de pliage de côté (700) se déplace dans la direction pour s'approcher de la partie récipient (133), le deuxième corps (721) se déplace linéairement dans la direction pour s'approcher de la partie récipient (133).

19. Appareil selon la revendication 18, dans lequel le mouvement linéaire du deuxième corps (721) est un mouvement linéaire se déplaçant le long d'un plan virtuel parallèle à un plan formé par une partie de fond de la partie récipient (133).
